# EUROPEAN PATENT APPLICATION

(11) **EP 3 214 469 A1**
(43) Date of publication of application: **06.09.2017**
(21) Application number: 15856069.8
(22) Date of filing: 27.10.2015
(51) Int. Cl.: G02B 5/18, B42D 25/30, G02B 5/02

(54) **RUGGED STRUCTURE AND SECURITY MEDIUM**

(30) Priority: 28.10.2014 JP 2014218924
(71) Applicant: Dai Nippon Printing Co., Ltd., Tokyo 162-8001 (JP)
(72) Inventor: KITAMURA, Mitsuru, Tokyo 162-8001 (JP)
(74) Representative: Müller-Boré & Partner Patentanwälte PartG mbB
(86) International application number: PCT/JP2015/080274
(87) International publication number: WO 2016/068143

(57) **Abstract**

To provide a relief structure having a simple structure, capable of being manufactured with ease and at low cost, and capable of improving visibility, and a security medium having the relief structure.

A relief structure includes a grating structure part having a grating formed at a predetermined angle. The grating structure part includes a scattering structure part having a light scattering property.

## Description

### Technical Field

The present invention relates to a relief structure which is stuck or transferred to an article to prevent the counterfeiting of the article and a security medium having the relief structure.

### Background Art

There is disclosed a subtractive color filter that changes its color depending on an observation direction using a zero-order diffraction light (see Patent Literature 1).

### Citation List

### Patent Literature

Patent Literature 1: JP-T 58-500916

### Summary

### Technical Problem

However, when the structure disclosed in Patent Literature 1 is observed as it is, reflected light becomes so bright that the angular range over which a red or green color can be observed is narrow.

The object of the present invention is to provide a relief structure having a simple structure, capable of being manufactured with ease and at low cost, and capable of improving visibility, and a security medium having the relief structure.

### Solution to Problems

To attain the above object, a relief structure according to an embodiment of the present invention includes a grating structure part having a grating formed at a predetermined angle, wherein the grating structure part includes a scattering structure part having a light scattering property.

Further, in the relief structure according to an embodiment of the present invention, the grating structure part includes a first unit structure part and a second unit structure part having a different configuration from that of the first unit structure part, and the scattering structure part is formed so as to produce a scattering effect by the different structures of the first unit structure part and second unit structure part.

Further, in the relief structure according to an embodiment of the present invention, the first unit structure part and the second unit structure part are formed according to phase information of a Fourier transformation pattern.

Further, in the relief structure according to an embodiment of the present invention, the second unit structure part is formed such that at least a part thereof is two-dimensionally shifted from the first unit structure part.

Further, in the relief structure according to an embodiment of the present invention, at least one of the first and second unit structure parts has the non-grating part in at least a part thereof.

Further, in the relief structure according to an embodiment of the present invention, at least a part of the second unit structure part is different in shape from the first unit structure part.

Further, in the relief structure according to an embodiment of the present invention, the grating structure part includes a first area having a first grating formed at a predetermined angle and a second area having a second grating rotated by a predetermined angle with respect to the first grating.

A security medium according to an embodiment of the present invention includes:
the relief structure;
a refractive index layer formed on the surface of the relief structure; and
an adhesive layer formed on the surface of the refractive index layer.

A security document according to an embodiment of the present invention includes the relief structure.

### Advantageous Effects

According to the present invention, there can be provided a relief structure having a simple structure, capable of being manufactured with ease and at low cost, and capable of improving visibility, and a security medium having the relief structure.

### Brief Description of Drawings

FIG. 1 is a view illustrating a relief structure according to an embodiment of the present invention as viewed in a predetermined direction;
FIG. 2 is a view illustrating the relief structure according to the present embodiment as viewed in a direction rotated by 90° with respect to the predetermined direction;
FIG. 3 illustrates an example of a security medium including the relief structure according to the present embodiment in which a grating is formed according to phase information of a Fourier transformation pattern;
FIG. 4 illustrates a grating structure part including a scattering structure part according to a first embodiment;
FIG. 5 illustrates the grating structure part including the scattering structure part according to a second embodiment;
FIG. 6 illustrates the grating structure part including the scattering structure part according to a third embodiment; and
FIG. 7 illustrates the grating structure part including the scattering structure part according to another embodiment.

### Description of Embodiments

A relief structure according to an embodiment of the present invention will be described below with reference to the accompanying drawings.

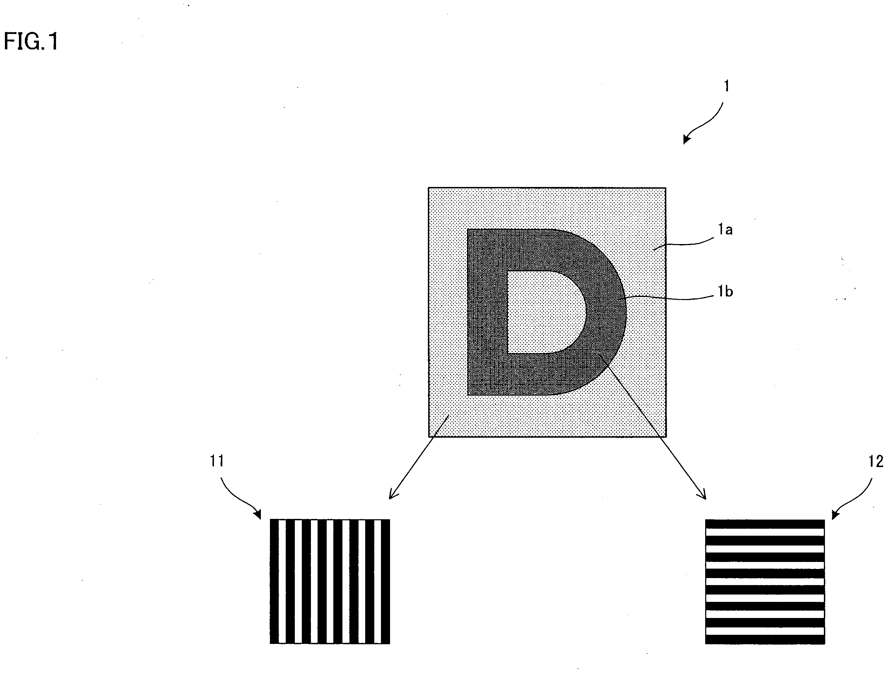

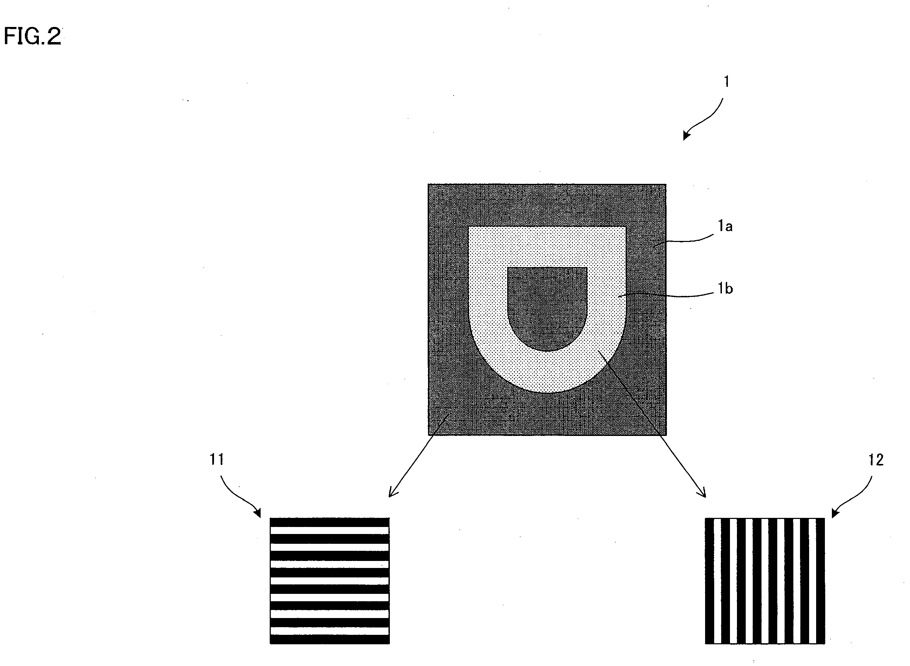

FIG. 1 is a view illustrating the relief structure according to an embodiment of the present invention as viewed in a predetermined direction. FIG. 2 is a view illustrating the relief structure according to the present embodiment as viewed in a direction rotated by 90° with respect to the predetermined direction.

For example, in the present embodiment, a relief structure 1 includes a first area 1a constituting a background and a second area 1b constituting a character, as illustrated in FIG. 1. In the state illustrated in FIG 1, the first area 1a includes a first grating 11 which is a vertical grating, and the second area 1b includes a second grating 12 which is a lateral grating obtained by rotating the vertical grating by 90°.

The first grating 11 has a grating pitch of 370 nm and a depth of 100 nm and constitutes the first area 1a which looks red in the state illustrated in FIG. 1. The second grating 12 has a grating pitch of 370 nm and a depth of 100 nm and constitutes the second area 1b which looks green in the state illustrated in FIG. 1.

When the thus formed relief structure 1 is rotated by 90° from the state illustrated in FIG. 1 to the state illustrated in FIG. 2, the first grating 11 is turned into a lateral grating, and the second grating 12 is turned into a vertical grating which is at an angle of 90° with respect to the lateral grating. In this state illustrated in FIG. 2, the first grating 11 constitutes the first area 1a which looks green, and the second area 1b constitutes the second grating 12 which looks red.

In the present embodiment, the first and second gratings 11 and 12 are made to look red and green; alternatively, however, the first and second gratings 11 and 12 may be made to look like other colors by adjusting the grating pitch and depth. In this case, the grating pitch is preferably set to a length equal to or less than the wavelength (e.g., 500 nm) of a visible light.

When the thus formed relief structure 1 is observed as it is, reflected light becomes so bright that the angular range over which the red or green color can be observed is narrow. Therefore, in the present embodiment, a structure that scatters the reflected light is employed. As the structure for scattering the reflected light, a structure using a diffusion layer has conventionally been used; however, in such a structure, the thickness and the number of materials to be used are increased, resulting in increase in cost. Thus, in the present embodiment, a grating structure is used to scatter the reflected light. The following describes the scattering structure.

In the relief structure 1 according to the present embodiment, a grating is formed on a Fourier transformation pattern or the like to form a scattering structure part, whereby and diffusion functions can be realized by a relief shape alone.

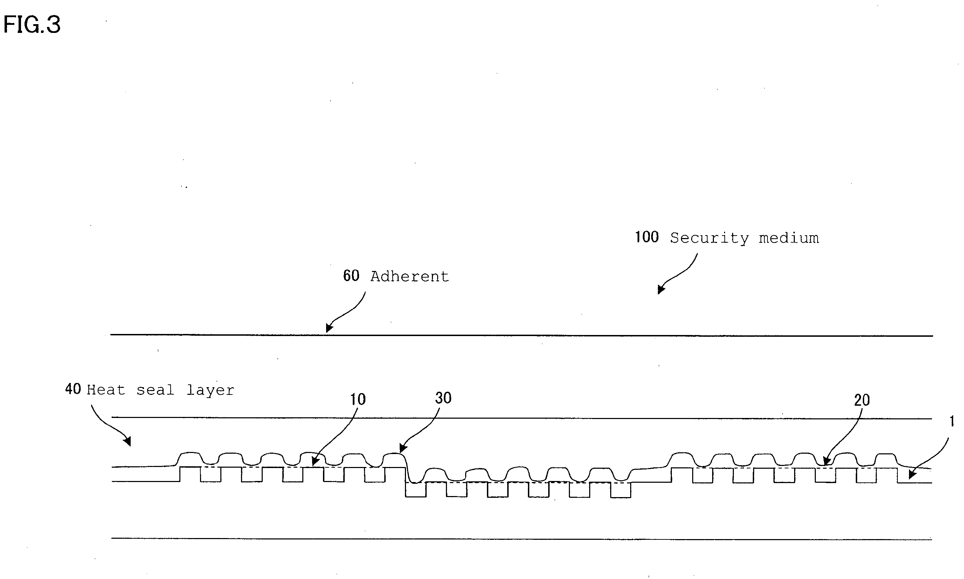

FIG. 3 illustrates an example of a security medium 100 including the relief structure 1 according to the present embodiment in which a grating is formed according to phase information of a Fourier transformation pattern.

In the relief structure 1 included in the security medium 100 according to the present embodiment, when a grating structure part 10 is formed according to phase information of a Fourier transformation pattern 20, a part of the grating structure part 10 is formed so as to have a different structure from that of the rest of the grating structure part 10 to thereby form a scattering structure part having a scattering effect. A refractive index layer is vapor-deposited on the surface of the Fourier transformation pattern 20 which the grating structure part 10 is formed. For example, in the present embodiment, a high refractive index layer 30 of zinc sulfide (ZnS) having a refractive index of 2.3 and a thickness of about 100 nm is deposited. The material of the high refractive index layer is not limited to zinc sulfide (ZnS), but may be any high refractive index material such as titanium oxide. For example, a heat seal layer 40 is formed on the high refractive index layer 30 as an adhesive layer.

The relief structure 1 and high refractive index layer 30 are stuck to an adherend 60 through the heat seal layer 40. Examples of the adherend 60 include articles (i.e., also referred to as "security documents") requiring counterfeiting prevention, such as an ID, a certificate, a passport, a bill, a cash voucher, a passbook, a public deed, and a brand protection label.

Although not illustrated, when the relief structure 1, high refractive index layer 30, and heat seal layer 40 are formed on a base material, a relief structure transfer foil can be obtained. The heat seal layer 40 of the relief structure transfer foil is brought into contact with the adherend 60, followed by peeling-off of the base material, whereby the security medium 100 can be obtained. To facilitate the peeling-off of the base material of the relief structure transfer foil, a peeling layer may be provided between the base material and the relief structure 1. The security medium 100 and relief structure transfer foil described above are not limited to the above configuration, but another configuration may be added thereto when needed.

The Fourier transformation pattern may be formed according to the method described in JP 2001-337584A or JP 2011-123266A. Further, as described in JP 2007-15196A, the relief structure 1 may be formed so as to allow observation of a predetermined image when a light from a point light source directly incident on the relief structure 1 applied with the Fourier transformation pattern or incident thereon after once reflected is observed through the relief structure 1, or when a laser light transmitted through the relief structure 1 or a laser light transmitted through the relief structure 1 and then reflected is observed.

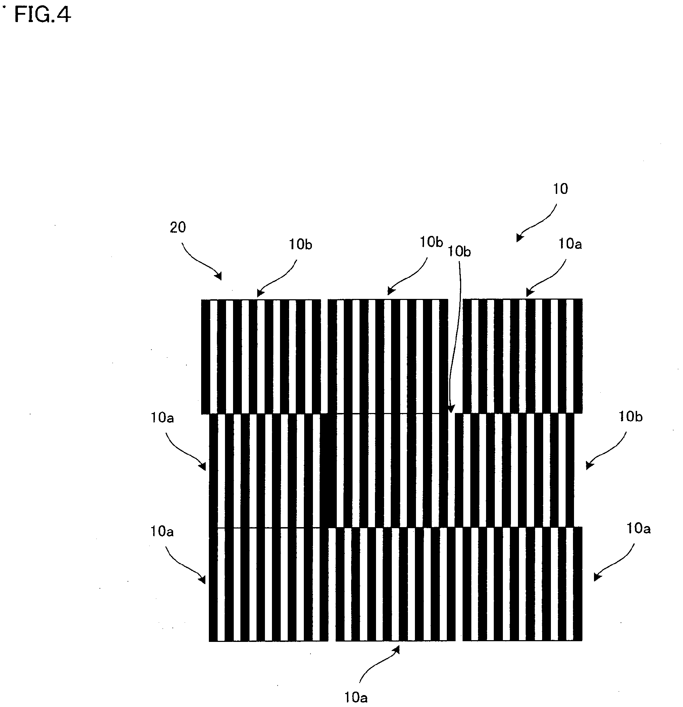

FIG. 4 illustrates the grating structure part including the scattering structure part according to a first embodiment.

The grating structure part 10 according to the first embodiment includes a first unit structure part 10a and a second unit structure part 10b. The left-right or up-down position of the grating is two-dimensionally shifted between the first unit structure part 10a and the second unit structure part 10b in a plane constituting the grating according to phase information of the Fourier transformation pattern to thereby obtain the scattering structure part. For example, in the grating structure part 10 according to the first embodiment, assuming that the phase of the Fourier transformation pattern has two values: 0 and π, the first unit structure part 10a is formed at the phase 0 part, and the second unit structure part 10b is formed at the phase π part by shifting the second unit structure part 10b in the direction orthogonal to the grating line by a half of the grating pitch, as illustrated in FIG. 4.

As described above, in the relief structure 1 according to the present embodiment, the grating is formed according to phase information of the Fourier transformation pattern, so that it is possible to form the grating including the scattering structure part in a single process without addition of a diffusion layer. Thus, there can be provided a relief structure having a simple structure, capable of being manufactured with ease and at low cost, and having improved visibility.

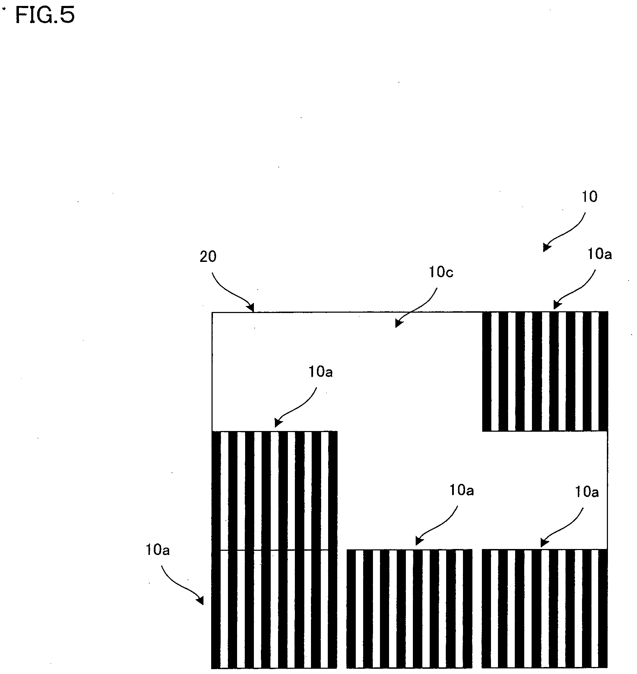

FIG. 5 illustrates the grating structure part including the scattering structure part according to a second embodiment.

The grating structure part 10 according to the second embodiment includes a non-grating part in at least a part of the first and second unit structure parts 10a and 10b. For example, in the grating structure part 10 according to the second embodiment, assuming that the phase of the Fourier transformation pattern has two values: 0 and π, the first unit structure part 10a is formed at the phase 0 part, and the non-grating part 10c where no grating is formed is set at the phase π part, as illustrated in FIG. 5. Thus, the scattering structure part is constituted by the first unit structure part 10a, second unit structure part 10b, and non-grating part 10c. The non-grating part 10c may be provided in at least a part of the first and second unit structure parts 10a and 10b.

As described above, in the relief structure 1 according to the present embodiment, the grating is formed according to phase information of the Fourier transformation pattern, so that it is possible to form the grating including the scattering structure part in a single process without addition of a diffusion layer. Thus, there can be provided a relief structure having a simpler structure, capable of being manufactured with ease and at low cost, and having improved visibility.

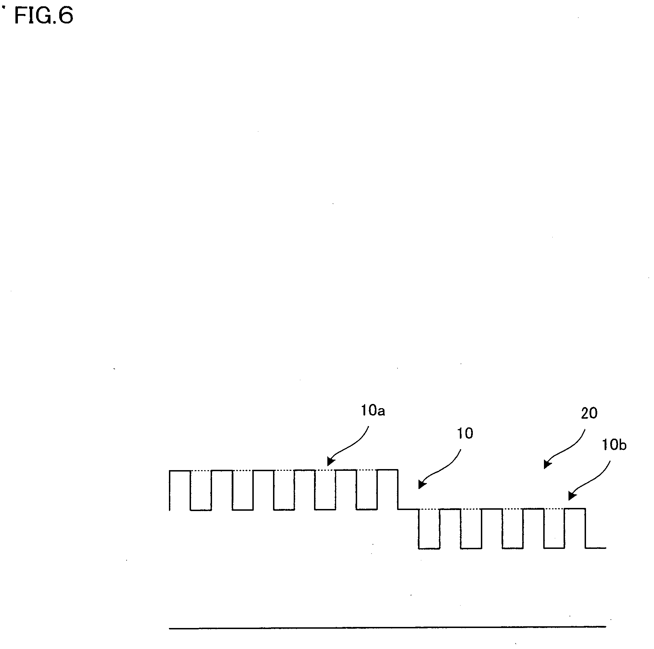

FIG. 6 illustrates the grating structure part including the scattering structure part according to a third embodiment.

The grating structure part 10 according to the third embodiment includes the first unit structure part 10a and the second unit structure part 10b. The first unit structure part 10a and the second unit structure part 10b are formed so as to be shifted in the grating depth direction according to phase information of the Fourier transformation pattern and thus to have different shapes from each other, whereby the scattering structure part is obtained. For example, in the grating structure part 10 according to the third embodiment, assuming that the phase of the Fourier transformation pattern has two values: 0 and π, the first unit structure part 10a is formed at the phase 0 part, and the second unit structure part 10b different in shape from the first unit structure part 10a is formed at the phase π part by shifting the second unit structure part 10b by, e.g., 90 nm in the depth direction, as illustrated in FIG. 6.

As described above, in the relief structure 1 according to the present embodiment, the grating is formed according to phase information of the Fourier transformation pattern 20, so that it is possible to form the grating including the scattering structure part in a single duplication process without addition of a diffusion layer. Thus, there can be provided a relief structure having a simple structure, capable of being manufactured with ease and at low cost, and having improved visibility.

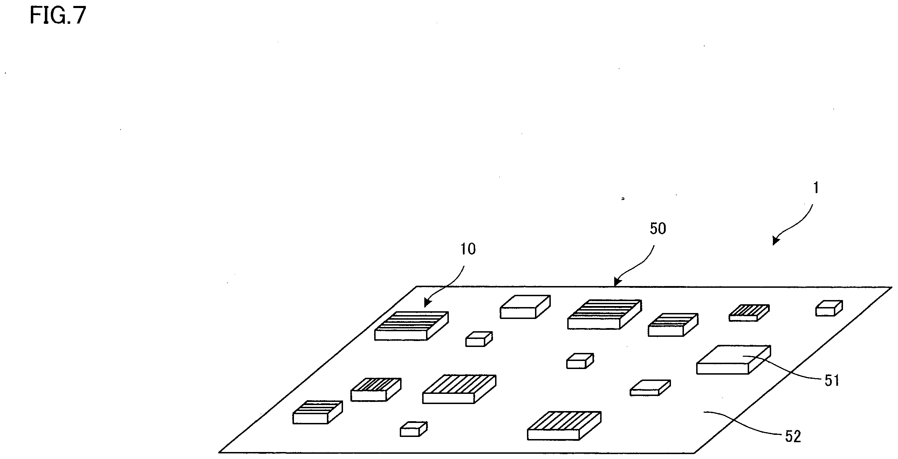

FIG. 7 illustrates the grating structure part including the scattering structure part according to another embodiment.

In the grating structure part 10 according to the embodiment illustrated in FIG. 7, the grating is formed on a scattering pattern 50. The scattering pattern 50 has a structure in which minute convex parts 51 formed on the surface thereof are used as scattering elements. Although the grating structure is formed only on the upper surface of the convex part 51 in the example of FIG. 7, it may be formed on a concave part 52. That is, the grating structure may be formed on at least one of the convex part 51 and concave part 52.

As described above, in the relief structure 1 according to the present embodiment, the grating is formed on the scattering pattern 50, so that it is possible to form the grating including the scattering structure part in a single process without addition of a diffusion layer. Thus, there can be provided a relief structure having a simple structure, capable of being manufactured with ease and at low cost, and having improved visibility.

As described above, the relief structure 1 according to the present embodiment includes the grating structure part 10 having the grating formed at a predetermined angle, and the grating structure part 10 includes the scattering structure part 20 or 50 having a light scattering property. Thus, there can be provided a relief structure having a simple structure, capable of being manufactured with ease and at low cost, and having improved visibility.

Further, in the relief structure 1 according to the present embodiment, the grating structure part 10 includes the first unit structure part 10a and the second unit structure part 10b having a different configuration from that of the first unit structure part 10a, and the scattering structure part 20 or 50 is formed so as to produce a scattering effect by the different structures of the first unit structure part 10a and second unit structure part 10b. Thus, there can be provided a relief structure having a simpler structure and capable of being manufactured with ease and at low cost.

The first unit structure part 10a and second unit structure part 10b are formed according to phase information of the Fourier transformation pattern, allowing further improvement in visibility.

Further, in the relief structure 1 according to the present embodiment, the second unit structure part 10b is formed such that at least a part thereof is two-dimensionally shifted from the first unit structure part 10a. Thus, there can be provided a relief structure having a simpler structure, capable of being manufactured with ease and at low cost, and having improved visibility.

Further, in the relief structure 1 according to the present embodiment, at least one of the first and second unit structure parts 10a and 10b has the non-grating part in at least a part thereof. Thus, there can be provided a relief structure having a simpler structure, capable of being manufactured with ease and at low cost, and having improved visibility.

Further, in the relief structure 1 according to the present embodiment, at least a part of the second unit structure part 10b is different in shape from the first unit structure part 10a. Thus, there can be provided a relief structure having a simpler structure, capable of being manufactured with ease and at low cost, and having improved visibility.

Further, in the relief structure 1 according to the present embodiment, the grating structure part 10 includes the first area 1a having the first grating 11 formed at a predetermined angle and the second area 1b having the second grating 12 rotated by a predetermined angle with respect to the first grating 11, allowing further improvement in visibility.

Further, the security medium according to the present embodiment includes the relief structure 1, the high refractive index layer 30 formed on the surface of the relief structure 1, the heat seal layer 40 formed on the surface of the high refractive index layer 30. Thus, there can be provided a security medium having a simple structure, capable of being manufactured with ease and at low cost, and having improved visibility.

While the relief structure and security medium have been described by way of the several embodiments, the present invention is not limited to the above embodiments, and various combinations and modifications thereof are possible.

### Reference Signs List

- 1:: Relief structure
- 1a:: First area
- 1b:: Second area
- 11:: First grating
- 12:: Second grating
- 10:: Grating structure part
- 10a:: First unit structure part
- 10b:: Second unit structure part
- 20:: Fourier transformation pattern (scattering structure part)
- 30:: High refractive index layer
- 40:: Heat seal layer (adhesive layer)
- 50:: Scattering pattern (scattering structure part)
- 100:: Security medium

## Claims

1. A relief structure **characterized by** comprising a grating structure part having a grating formed at a predetermined angle, wherein
the grating structure part includes a scattering structure part having a light scattering property.

2. The relief structure according to claim 1, **characterized in that**
the grating structure part includes a first unit structure part and a second unit structure part having a different configuration from that of the first unit structure part, and
the scattering structure part is formed so as to produce a scattering effect by the structures of the first unit structure part and second unit structure part different from each other.

3. The relief structure according to claim 2, **characterized in that**
the first unit structure part and second unit structure part are formed according to phase information of a Fourier transformation pattern.

4. The relief structure according to claim 2 or 3, **characterized in that**
the second unit structure part is formed such that at least a part thereof is two-dimensionally shifted from the first unit structure part.

5. The relief structure according to any one of claims 2 to 4, **characterized in that**
the first and second unit structure parts have the non-grating part in at least a part thereof.

6. The relief structure according to any one of claims 2 to 5, **characterized in that**
at least a part of the second unit structure part is different in shape from the first unit structure part.

7. The relief structure according to any one of claims 1 to 6, **characterized in that**
the grating structure part includes a first area having a first grating formed at a predetermined angle and a second area having a second grating rotated by a predetermined angle with respect to the first grating.

8. A security medium **characterized by** comprising:
the relief structure as claimed in any one of claims 1 to 7;
a refractive index layer formed on the surface of the relief structure; and
an adhesive layer formed on the surface of the refractive index layer.

9. A security document **characterized by** comprising the relief structure as claimed in any one of claims 1 to 8.
